# EUROPEAN PATENT APPLICATION

(11) **EP 4 485 796 A1**
(43) Date of publication of application: **01.01.2025**
(21) Application number: 22927990.6
(22) Date of filing: 25.03.2022
(51) Int. Cl.: H02S 40/34

(54) **PHOTOVOLTAIC MODULE HAVING SIAMESE JUNCTION BOX**

(30) Priority: 24.02.2022 CN 202220384199 U
(71) Applicant: Hengdian Group DMEGC Magnetics Co., Ltd., Zhejiang Province 322118 (CN)
(72) Inventor: LI, Chunhui, Jinhua, Zhejiang 322118 (CN); LU, Jiangkai, Jinhua, Zhejiang 322118 (CN); HE, Yue, Jinhua, Zhejiang 322118 (CN); YE, Zhangbo, Jinhua, Zhejiang 322118 (CN); JIANG, Zuo, Jinhua, Zhejiang 322118 (CN)
(74) Representative: Müller Schupfner & Partner Patent- und Rechtsanwaltspartnerschaft mbB (Hamburg)
(86) International application number: PCT/CN2022/083015
(87) International publication number: WO 2023/159711

(57) **Abstract**

A photovoltaic module having a Siamese junction box is disclosed, belonging to the technical field of photovoltaic modules, including a photovoltaic module body (11) and a busbar (12) provided on the photovoltaic module body (11), where a back face of the photovoltaic module body (11) is provided with a Siamese junction box; the busbar (12) is provided with four lead-out wires (13) connected to the Siamese junction box; the Siamese junction box includes an intermediate box body (3), and a positive electrode box body (1) and a negative electrode box body (4) provided on two sides of the intermediate box body (3), respectively; the intermediate box body (3) is connected to the positive electrode box body (1) and the negative electrode box body (4) through a cable (2) to form an integrated structure; three diodes (6) connected sequentially are provided inside the intermediate box body (3), and the three diodes (6) are provided in a staggered manner. The three diodes (6) are all provided in the intermediate box body (3), and the intermediate box body (3) is connected to the positive electrode box body (1) and the negative electrode box body (4) through the cable (2) to form the integrated structure. Therefore, the integrity of an integral junction box is provided, and the problems of heat dissipation and high costs of the integral junction box are solved.

## Description

### Field of the Invention

The present disclosure belongs to the technical field of photovoltaic modules, and particularly relates to a photovoltaic module having a Siamese junction box.

### Background of the Invention

A photovoltaic junction box is a connection device between a solar battery array composed of solar battery modules and a solar charging control device, and its main function is to connect and protect the solar photovoltaic modules, connect the power generated by the solar battery with an external line, and conduct the current generated by the photovoltaic module.

With the increasing size of the cells at present, the current becomes larger, and the existing junction box has some problems. For example,
(1) due to the heat dissipation of the integrated junction box, the junction box needs to be made very large, which is costly;
(2) for a three-split junction box, each box body includes a junction box housing, an upper cover, a conductive copper sheet, and a diode, and six lead-out wires are required for welding. In a normal case, the more welding points, the greater the heating and loss of the photovoltaic module.

### Summary of the Invention

In order to solve the problems set forth in the background, the present disclosure provides a photovoltaic module having a Siamese junction box, which has the features of reducing diode heating and production costs.

In order to achieve the above-mentioned object, the present disclosure provides the following technical solutions. A photovoltaic module having a Siamese junction box is provided, including a photovoltaic module body and a busbar provided on the photovoltaic module body, where a back face of the photovoltaic module body is provided with a Siamese junction box; the busbar is provided with four lead-out wires connected to the Siamese junction box; the Siamese junction box includes an intermediate box body, and a positive electrode box body and a negative electrode box body provided on two sides of the intermediate box body, respectively; the intermediate box body is connected to the positive electrode box body and the negative electrode box body through a cable to form an integrated structure; three diodes connected sequentially are provided inside the intermediate box body, and the three diodes are provided in a staggered manner.

Further, in order to conduct electricity and conduct heat at the same time, increase a heat dissipation area, and improve the heat conduction performance and heat dissipation performance, two adjacent diodes are connected through an intermediate conductive sheet. End side conductive sheets are connected to end portions of the diodes on two sides.

Further, in order to weld to the lead-out wires of the busbar, a positive electrode box conductive sheet is provided inside the positive electrode box body. A negative electrode box conductive sheet is provided inside the negative electrode box body.

Further, in order to reduce the loss and improve the production efficiency, the positive electrode box conductive sheet and the negative electrode box conductive sheet are connected to the corresponding end side conductive sheets through the cable. A copper wire inside the cable is riveted to the corresponding positive electrode box conductive sheet, negative electrode box conductive sheet, and end side conductive sheets.

Further, in order to connect to an external line, connectors are also connected to the positive electrode box conductive sheet and the negative electrode box conductive sheet.

Further, in order to increase a gap between the diodes, thereby increasing a heat dissipation space and improving the heat dissipation performance, the three diodes are distributed in a triangle.

Further, in order to facilitate rapid identification of the junction box, upper covers are provided above the intermediate box body, the positive electrode box body, and the negative electrode box body, and corresponding signboards are provided on the upper covers.

Compared with the related art, the beneficial effects of the present disclosure are as follows.
1. The three diodes of the present disclosure are all provided in the intermediate box body, and the intermediate box body is connected to the positive electrode box body and the negative electrode box body through the cable to form the integrated structure. Therefore, the integrity of an integral junction box is provided, and the problems of heat dissipation and high costs of the integral junction box are solved.
2. Two adjacent diodes of the present disclosure are connected through the intermediate conductive sheet, and the end side conductive sheets are connected to the end portions of the diodes on two sides, which may conduct electricity and conduct heat at the same time, increasing the heat dissipation area, and improving the heat conduction performance and heat dissipation performance.
3. According to the present disclosure, only four lead-out wires need to be connected, which can improve the production efficiency while reducing the loss.
4. The three diodes of the present disclosure are provided in a staggered manner, increasing the gap between the diodes, thereby increasing the heat dissipation space and improving the heat dissipation performance.

### Brief Description of the Drawings

The accompanying drawings, which are included to provide a further understanding of the present disclosure and constitute a part of this specification, illustrate the present disclosure together with the embodiments of the present disclosure and do not limit the present disclosure. In the drawings:
Fig. 1 is a general assembly schematic diagram of the present disclosure;
Fig. 2 is a schematic structural diagram of a photovoltaic module body of the present disclosure;
Fig. 3 is a schematic diagram of a lead-out wire of the present disclosure;
Fig. 4 is a schematic structural diagram of a Siamese junction box of the present disclosure; and
Fig. 5 is a general assembly schematic diagram of embodiment 2 of the present disclosure.

In the drawings: 1-positive electrode box body; 2-cable; 3-intermediate box body; 4-negative electrode box body; 5-positive electrode box conductive sheet; 6-diode; 7-intermediate conductive sheet; 8-end side conductive sheet; 9-negative electrode box conductive sheet; 10-connector; 11-photovoltaic module body; 12-busbar; and 13-lead-out wire.

### Detailed Description of the Embodiments

The technical solutions in the embodiments of the present disclosure will be clearly and completely described below in conjunction with the accompanying drawings in the embodiments of the present disclosure. Obviously, the described embodiments are only some embodiments of the present disclosure, not all embodiments. Based on the embodiments of the present disclosure, all other embodiments obtained by a person skilled in the art without inventive effort fall within the scope of the present disclosure.

### Embodiment 1

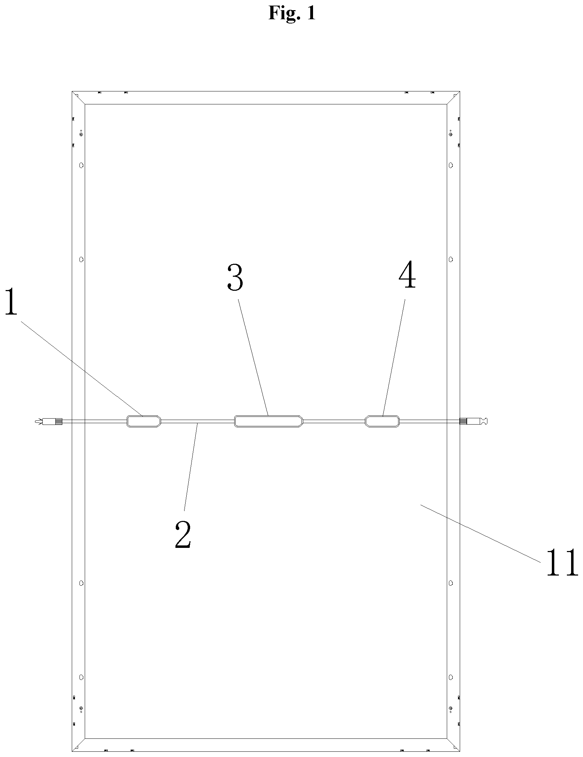

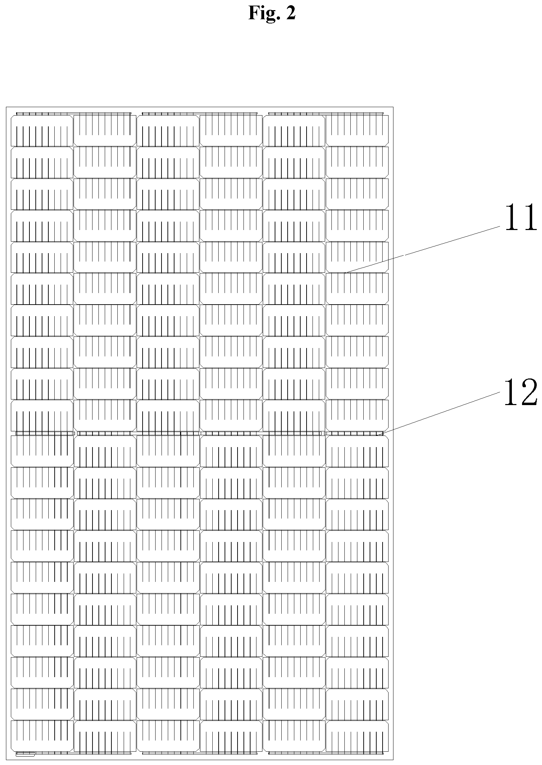

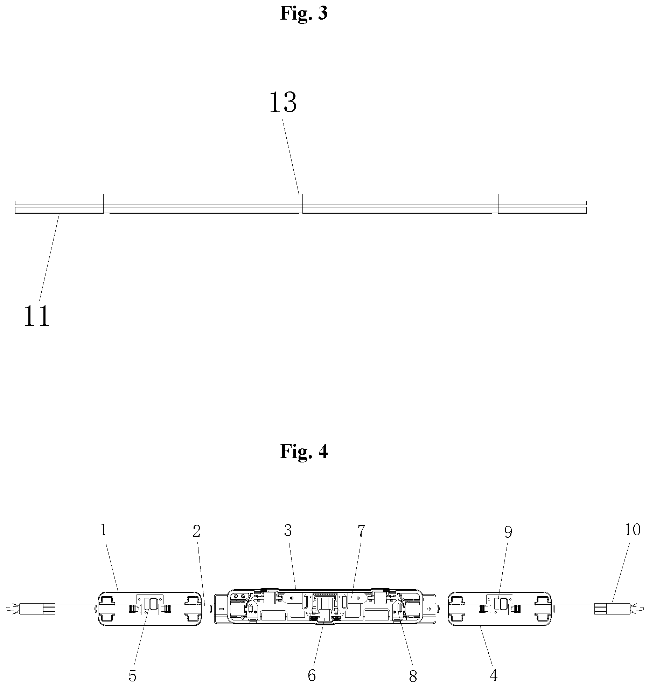

Referring to Figs. 1-4, the present disclosure provides the following technical solutions. A photovoltaic module having a Siamese junction box is provided, including a photovoltaic module body 11 and a busbar 12 provided on the photovoltaic module body 11.

A back face of the photovoltaic module body 11 is provided with a Siamese junction box. The busbar 12 is provided with four lead-out wires 13 connected to the Siamese junction box. The Siamese junction box includes an intermediate box body 3, and a positive electrode box body 1 and a negative electrode box body 4 provided on two sides of the intermediate box body 3, respectively. The intermediate box body 3 is connected to the positive electrode box body 1 and the negative electrode box body 4 through a cable 2 to form an integrated structure. Three diodes 6 connected sequentially are provided inside the intermediate box body 3, and the three diodes 6 are provided in a staggered manner. The photovoltaic module body 11 is a scribing photovoltaic module or a whole-piece photovoltaic module, and in this embodiment, the scribing photovoltaic module is preferably used. The Siamese junction box is provided on a middle position of the back face of the photovoltaic module body 11.

According to the above-mentioned technical solution, the three diodes 6 are all provided in the intermediate box body 3, and the intermediate box body 3 is connected to the positive electrode box body 1 and the negative electrode box body 4 through the cable 2 to form the integrated structure. Therefore, the integrity of an integral junction box is provided, and the problems of heat dissipation and high costs of the integral junction box are solved.

Specifically, two adjacent diodes 6 are connected through an intermediate conductive sheet 7, and end side conductive sheets 8 are connected to end portions of the diodes 6 on two sides.

The above-mentioned technical solution may conduct electricity through the conductive sheets and conduct heat at the same time, increasing a heat dissipation area, and improving the heat conduction performance and heat dissipation performance.

Specifically, a positive electrode box conductive sheet 5 is provided inside the positive electrode box body 1, and a negative electrode box conductive sheet 9 is provided inside the negative electrode box body 4.

The above-mentioned technical solution is used for welding to the lead-out wires of the busbar.

Specifically, the positive electrode box conductive sheet 5 and the negative electrode box conductive sheet 9 are connected to the corresponding end side conductive sheets 8 through the cable 2, and a copper wire inside the cable 2 is riveted to the corresponding positive electrode box conductive sheet 5, negative electrode box conductive sheet 9, and end side conductive sheets 8.

According to the above-mentioned technical solution, the intermediate box body 3, the positive electrode box body 1, and the negative electrode box body 4 are connected to form an integrated structure so that the integrity of an integral junction box is provided. Meanwhile, only four lead-out wires 13 need to be connected, which can improve the production efficiency while reducing the loss.

Specifically, connectors 10 are also connected to the positive electrode box conductive sheet 5 and the negative electrode box conductive sheet 9.

The above-mentioned technical solution is used for connecting to an external line.

### Embodiment 2

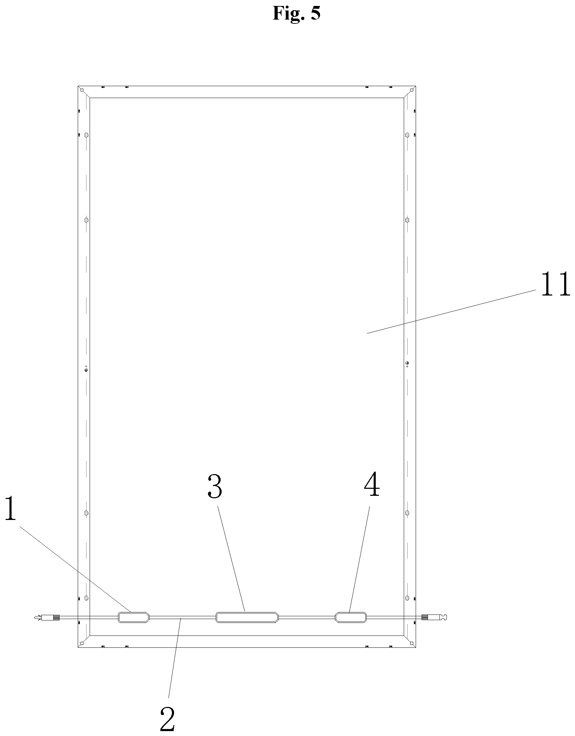

Referring to Fig. 5, this embodiment differs from embodiment 1 in that: specifically, the photovoltaic module body 11 is a whole-piece photovoltaic module, and the Siamese junction box is provided at an edge position of the back face of the photovoltaic module body 11.

### Embodiment 3

This embodiment differs from embodiment 1 in that: specifically, the three diodes 6 are distributed in a triangle.

According to the above-mentioned technical solution, the gap between the diodes 6 is increased, thereby increasing the heat dissipation space and improving the heat dissipation performance.

### Embodiment 4

This embodiment differs from embodiment 1 in that: specifically, upper covers are provided above the intermediate box body 3, the positive electrode box body 1, and the negative electrode box body 4, and corresponding signboards are provided on the upper covers.

According to the above-mentioned technical solution, rapid identification of the junction box is facilitated.

In summary, the three diodes 6 of the present disclosure are all provided in the intermediate box body 3, and the intermediate box body 3 is connected to the positive electrode box body 1 and the negative electrode box body 4 through the cable 2 to form the integrated structure. Therefore, the integrity of the integral junction box is provided, and the problems of heat dissipation and high costs of the integral junction box are solved. Two adjacent diodes 6 of the present disclosure are connected through the intermediate conductive sheet 7, and the end side conductive sheets 8 are connected to the end portions of the diodes 6 on two sides, which may conduct electricity and conduct heat at the same time, increasing the heat dissipation area, and improving the heat conduction performance and heat dissipation performance. According to the present disclosure, only four lead-out wires 13 need to be connected, which can improve the production efficiency while reducing the loss. The three diodes 6 of the present disclosure are provided in a staggered manner, increasing the gap between the diodes 6, thereby increasing the heat dissipation space and improving the heat dissipation performance.

Finally, it should be noted that the above are only preferred embodiments of the present disclosure and are not intended to limit the present disclosure. Although the present disclosure has been described in detail with reference to the foregoing embodiments, a person skilled in the art will be able to make modifications to the technical solutions described in the foregoing embodiments or make equivalents to some of the technical features thereof. Any modifications, equivalents, improvements, etc. made within the spirit and principles of the present disclosure should be included within the scope of the present disclosure.

## Claims

1. A photovoltaic module having a Siamese junction box, comprising a photovoltaic module body and a busbar provided on the photovoltaic module body, wherein a back face of the photovoltaic module body is provided with a Siamese junction box; the busbar is provided with four lead-out wires connected to the Siamese junction box; the Siamese junction box comprises an intermediate box body, and a positive electrode box body and a negative electrode box body provided on two sides of the intermediate box body, respectively; the intermediate box body is connected to the positive electrode box body and the negative electrode box body through a cable to form an integrated structure; three diodes connected sequentially are provided inside the intermediate box body, and the three diodes are provided in a staggered manner.

2. The photovoltaic module having a Siamese junction box according to claim 1, wherein two adjacent diodes are connected through an intermediate conductive sheet.

3. The photovoltaic module having a Siamese junction box according to claim 1, wherein end side conductive sheets are connected to end portions of the diodes on two sides.

4. The photovoltaic module having a Siamese junction box according to claim 3, wherein a positive electrode box conductive sheet is provided inside the positive electrode box body.

5. The photovoltaic module having a Siamese junction box according to claim 4, wherein a negative electrode box conductive sheet is provided inside the negative electrode box body.

6. The photovoltaic module having a Siamese junction box according to claim 5, wherein the positive electrode box conductive sheet and the negative electrode box conductive sheet are connected to the corresponding end side conductive sheets through the cable.

7. The photovoltaic module having a Siamese junction box according to claim 5, wherein connectors are also connected to the positive electrode box conductive sheet and the negative electrode box conductive sheet.

8. The photovoltaic module having a Siamese junction box according to claim 1, wherein the three diodes are distributed in a triangle.

9. The photovoltaic module having a Siamese junction box according to claim 5, wherein a copper wire inside the cable is riveted to the corresponding positive electrode box conductive sheet, negative electrode box conductive sheet, and end side conductive sheets.

10. The photovoltaic module having a Siamese junction box according to claim 1, wherein upper covers are provided above the intermediate box body, the positive electrode box body, and the negative electrode box body, and corresponding signboards are provided on the upper covers.
